# EUROPEAN PATENT APPLICATION

(11) **EP 4 542 276 A1**
(43) Date of publication of application: **23.04.2025**
(21) Application number: 23841746.3
(22) Date of filing: 27.02.2023
(51) Int. Cl.: G02B 6/42

(54) **LIQUID COOLING DEVICE AND COMMUNICATION APPARATUS HAVING SAME**

(30) Priority: 19.07.2022 CN 202210845715
(71) Applicant: ZTE Corporation, Shenzhen, Guangdong 518057 (CN)
(72) Inventor: JIANG, Xiaoyu, Shenzhen, Guangdong 518057 (CN); LIU, Fan, Shenzhen, Guangdong 518057 (CN); FAN, Haolong, Shenzhen, Guangdong 518057 (CN)
(74) Representative: Chimini, Francesco
(86) International application number: PCT/CN2023/078465
(87) International publication number: WO 2024/016668

(57) **Abstract**

The present invention provides a liquid cooling device and communication apparatus having same. The liquid-cooling heat dissipation apparatus comprises: a first optical module liquid-cooling plate (102A); a second optical module liquid-cooling plate (102B), the second optical module liquid-cooling plate (102B) being in communication with the first optical module liquid-cooling plate by means of a liquid-cooling pipeline; a liquid-cooling working medium, the liquid-cooling working medium circulating between the first optical module liquid-cooling plate (102A), the liquid-cooling pipeline and the second optical module liquid-cooling plate (102B); an optical module cage (200), wherein the optical module cage (200) comprises a first mounting layer (201A) and a second mounting layer (201B), the first mounting layer (201A) is located on an upper side of the second mounting layer (201B), an optical module is respectively mounted in the first mounting layer (201A) and the second mounting layer (201B), the first optical module liquid-cooling plate (102A) abuts against the optical module of the first mounting layer (201A), and the second optical module liquid-cooling plate (102B) abuts against the optical module of the second mounting layer (201B).

## Description

### Cross-Reference to Related Application

The present invention is proposed on the basis of Chinese Patent Application no. 202210845715.1 and filed on 19 July 2022, and claims priority to the Chinese Patent Application, the invention of which is hereby incorporated into the present invention for reference in its entirety.

### Technical Field

The present invention relates to, but is not limited to, the technical field of communications, and in particular, to a liquid cooling device and communication apparatus having same.

### Background

With the increase in the transmission capacity and speed of communication networks, the performance requirements for communication device are becoming higher and higher. Further, the volume of communication devices is also becoming smaller, which leads to the development of optical modules in communication devices towards a highly integrated direction. This results in a significant amount of heat generation during the operation of the optical modules. Conventional air cooling can no longer meet the heat dissipation requirements of optical modules. At present, liquid-cooling heat dissipation apparatuses are mainly used to dissipate heat of optical modules. The main component of the liquid-cooling heat dissipation apparatus is a liquid cooling plate filled with a liquid-working medium, which achieves heat dissipation by abutting against the optical module. However, optical module cages usually have multiple layers, and current heat dissipation apparatuses cannot meet the heat dissipation requirements of optical modules mounted in multi-layer optical module cages.

### Summary

The following is a summary of the subject matter described in detail herein. This summary is not intended to limit the scope of protection of the claims.

The embodiments of the present invention provide a liquid cooling device and communication apparatus having same.

According to a first aspect, an embodiment of the present invention provides a liquid-cooling heat dissipation apparatus, including: a first optical module liquid-cooling plate; a second optical module liquid-cooling plate, the second optical module liquid-cooling plate being in communication with the first optical module liquid-cooling plate by means of a liquid-cooling pipeline; a liquid-cooling working medium, the liquid-cooling working medium circulating between the first optical module liquid-cooling plate, the liquid-cooling pipeline and the second optical module liquid-cooling plate; an optical module cage, wherein the optical module cage includes a first mounting layer and a second mounting layer, the first mounting layer is located on an upper side of the second mounting layer, an optical module is respectively mounted in the first mounting layer and the second mounting layer, the first optical module liquid-cooling plate abuts against the optical module of the first mounting layer, and the second optical module liquid-cooling plate abuts against the optical module of the second mounting layer.

According to a second aspect, an embodiment of the present invention provides a communication device, including: the liquid-cooling heat dissipation apparatus according to the first aspect.

### Brief Description of the Drawings

Fig. 1 is a top view of a liquid-cooling heat dissipation apparatus mounted in a communication device according to an embodiment of the present invention;
Fig. 2 is a side view of a liquid-cooling heat dissipation apparatus installed in a communication device according to another embodiment of the present invention;
Fig. 3 is an enlarged cross-sectional view of Fig. 2 along A direction;
Fig. 4 is a schematic diagram of an optical module cage according to another embodiment of the present invention.

### Detailed Description of the Embodiments

It should be noted that, although functional modules have been divided in the schematic diagrams of devices and logical orders have been shown in the flowcharts, in some cases, the modules may be divided in a different manner, or the steps shown or described may be executed in an order different from the orders as shown in the flowcharts. The terms such as "first", "second" and the like in the description, the claims, or the accompanying drawings are used to distinguish similar objects, and are not necessarily used to describe a specific sequence or a precedence order.

The present invention provides a liquid-cooling heat dissipation apparatus and a communication device thereof. The liquid-cooling heat dissipation apparatus includes: a first optical module liquid-cooling plate; a second optical module liquid-cooling plate, the second optical module liquid-cooling plate being in communication with the first optical module liquid-cooling plate by means of a liquid-cooling pipeline; a liquid-cooling working medium, the liquid-cooling working medium circulating between the first optical module liquid-cooling plate, the liquid-cooling pipeline and the second optical module liquid-cooling plate; an optical module cage, wherein the optical module cage includes a first mounting layer and a second mounting layer, the first mounting layer is located on an upper side of the second mounting layer, an optical module is respectively mounted in the first mounting layer and the second mounting layer, the first optical module liquid-cooling plate abuts against the optical module of the first mounting layer, and the second optical module liquid-cooling plate abuts against the optical module of the second mounting layer. According to the technical solution of the present embodiment, a plurality of optical module liquid-cooling plates can be mounted on different installation layers of an optical module cage, and circulation of the liquid-cooling working medium is implemented by using the liquid-cooling pipeline, thereby satisfying a heat dissipation requirement of the optical modules provided on the multiple layers of the optical module cage, and improving a heat dissipation effect.

The technical solutions of the embodiments of the present invention will be further described below with reference to the drawings.

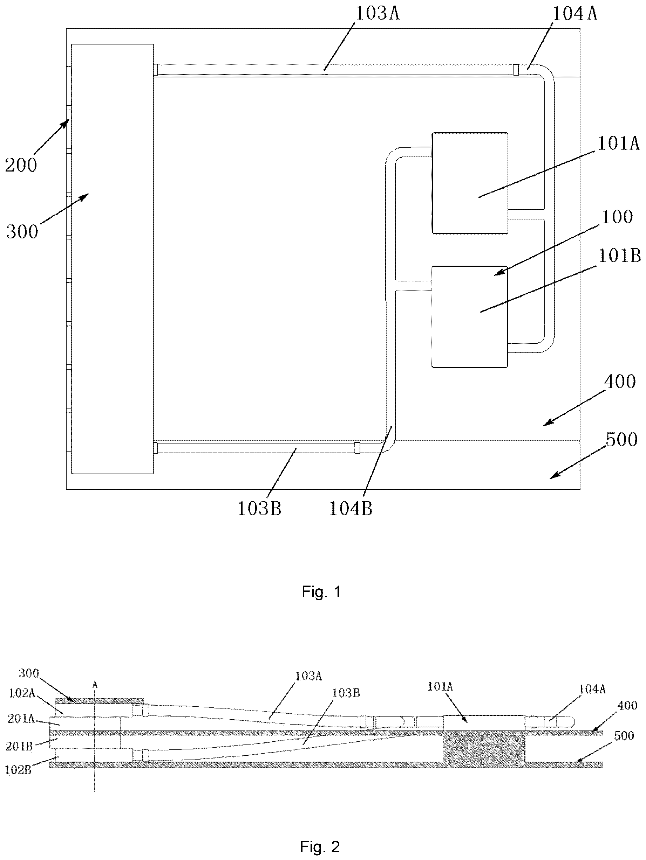

As shown in Figs. 1 and 2, an embodiment of the present invention provides a liquid-cooling heat dissipation apparatus 100, including:
a first optical module liquid-cooling plate 102A;
a second optical module liquid-cooling plate 102B, the second optical module liquid-cooling plate 102B being in communication with the first optical module liquid-cooling plate 102A by means of a liquid-cooling pipeline;
a liquid-cooling working medium, the liquid-cooling working medium circulating between the first optical module liquid-cooling plate 102A, the liquid-cooling pipeline and the second optical module liquid-cooling plate 102B; and
an optical module cage 200, wherein the optical module cage 200 includes a first mounting layer 201A and a second mounting layer 201B, the first mounting layer 201A is located on an upper side of the second mounting layer 201B, an optical module is respectively mounted in the first mounting layer 201A and the second mounting layer 201B, the first optical module liquid-cooling plate 102A abuts against the optical module of the first mounting layer 201A, and the second optical module liquid-cooling plate 102B abuts against the optical module of the second mounting layer 201B.

It should be noted that, the liquid-cooling working medium in the present embodiment may be a single-phase cooling working medium such as a fluoride solution, deionized water, or an aqueous glycol solution, and may also be a phase change working medium such as R134a, R1234yf and R1234ze, as long as liquid-cooling heat dissipation can be implemented, and the specific type of the liquid-cooling working medium is not limited in the present embodiment. In order to realize liquid-cooling heat dissipation, the liquid-cooling pipeline is not only in communication with the first optical module liquid-cooling plate 102A and the second optical module liquid-cooling plate 102B, but also in communication with an external circulation device by providing an opening, so as to realize the circulation of the liquid-cooling working medium. It is well known to a person skilled in the art how to achieve the control of circulation of the liquid-cooling working medium in the liquid cooling apparatus, which will not be repeated redundantly herein.

It should be noted that the first optical module liquid-cooling plate 102A and the second optical module liquid-cooling plate 102B may be cooling plates having a liquid circulation channel, such as a milling-groove cooling plate, a micro-channel cooling plate, and a copper-embedded tube cooling plate, and the specific type of the cooling plate may be selected according to an actual requirement.

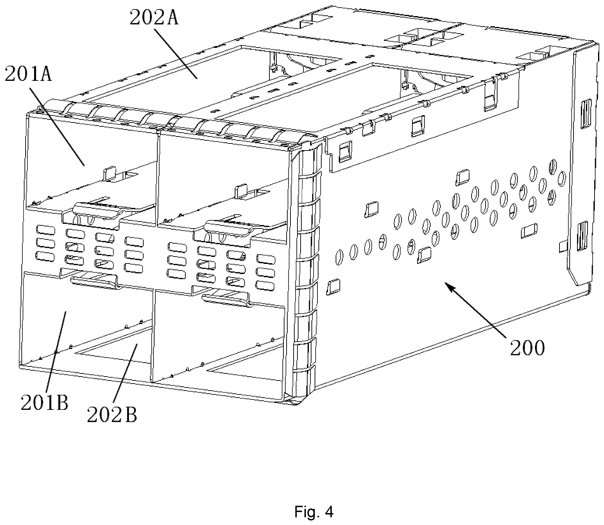

It should be noted that, in order to dissipate heat of a multi-layer optical module, the first optical module liquid-cooling plate 102A and the second optical module liquid-cooling plate 102B may be mounted on different layers of the optical module cage 200, for example, taking a double-layer optical module cage 200 shown in Fig. 4 as an example, in conjunction with Fig. 2, the first optical module liquid-cooling plate 102A abuts against an upper optical module; the second optical module liquid-cooling plate 102B abuts against a lower optical module, and is connected to two optical module liquid-cooling plates by means of a liquid-cooling pipeline; the heat of the upper optical module enters the liquid cooling medium by means of the first optical module liquid-cooling plate 102A; the heat of the lower optical module enters the liquid cooling medium by means of the second optical module liquid-cooling plate 102B; in this way, the heat dissipation requirements of multiple layers of the optical module can be simultaneously satisfied by means of a single liquid cooling apparatus 100, thereby effectively reducing the number of liquid-cooling heat dissipation apparatuses 100 in the communication device, and providing a structure foundation for reducing the volume of the communication device.

It should be noted that, both the first mounting layer 201A and the second mounting layer 201B may be provided with a plurality of optical module mounting grooves, so that a plurality of optical modules are mounted in each layer, and the quantities and sizes of the optical module mounting grooves of the first mounting layer 201A and the second mounting layer 201B may be adjusted according to actual requirements.

It should be noted that, referring to Fig. 1, the size of the first optical module liquid-cooling plate 102A may be adjusted according to the size of the first mounting layer 201A; the length and width of the first optical module liquid-cooling plate 102A may be greater than those of the first mounting layer 201A, so as to ensure sufficient contact with the optical module and improve heat dissipation efficiency. The second optical module liquid-cooling plate 102B is mounted in the same manner as the second mounting layer 201B, and details are not described herein again.

In addition, in the present embodiment, with reference to Fig. 1, the liquid-cooling heat dissipation apparatus 100 further includes:
a chip liquid-cooling module, which is in communication with the first optical module liquid-cooling plate and the second optical module liquid-cooling plate respectively by means of the liquid-cooling pipeline.

It should be noted that, in addition to the optical module, the chip of the communication device also generates much heat in the running process, and the mounting position of the chip is different from that of the optical module. In order to satisfy the heat dissipation of the chip while satisfying the liquid-cooling heat dissipation of the optical module, the chip liquid-cooling module is further provided in the present embodiment, and the heat dissipation of the chip is implemented by abutting the chip liquid-cooling module against the chip of the communication device.

It should be noted that, the chip liquid-cooling module may be a chip liquid-cooling plate, for example, a first chip liquid-cooling plate 101A shown in Fig. 1. For the cooling plate type of the first chip liquid-cooling plate 101A, reference may be made to the description of the foregoing embodiment. The size of the first chip liquid-cooling plate 101A may be adjusted according to the size of the chip to which the first chip liquid-cooling plate abuts against, which is not limited in the present embodiment.

It should be noted that, the manner in which the first chip liquid-cooling plate 101A is connected to the first optical module liquid-cooling plate 102A and the second optical module cooling plate may be adjusted according to the positions of the optical module cage 200 and the chip, as shown in Fig. 2, when the chip is located at one side of the optical module cage 200, and the first optical module liquid-cooling plate 102A and the second optical module liquid-cooling plate are respectively provided on an upper layer and a lower layer of the optical module cage 200, the first chip liquid-cooling plate 101A may communicate with the first optical module liquid-cooling plate 102A by means of one port, and communicate with the second optical module liquid-cooling plate 102B by means of another port, that is, the first chip liquid-cooling plate 101A is in communication with the first optical module liquid-cooling plate 102A and the second optical module liquid-cooling plate 102B, so that a liquid cooling path is formed between the first optical module liquid-cooling plate 102A, the first chip liquid-cooling plate 101A and the second optical module liquid-cooling plate 102B, thereby implementing liquid-cooling heat dissipation of the chip and the optical module simultaneously.

In addition, in an embodiment, referring to Fig. 1, the liquid cooling pipeline includes:
a first liquid-cooling pipeline, wherein the first liquid-cooling pipeline includes a first flexible pipeline 103A and a first metal pipeline 104A, one end of the first metal pipeline 104A is in communication with the chip liquid-cooling module, the other end is in communication with the first flexible pipeline 103A, and the first flexible pipeline 103A is in communication with the first optical module liquid-cooling plate 102A; and
a second liquid-cooling pipeline, wherein the second liquid-cooling pipeline includes a second flexible pipeline 103B and a second metal pipeline 104B, one end of the second metal pipeline 104B is in communication with the chip liquid-cooling module, the other end is in communication with the second flexible pipeline 103B, and the second flexible pipeline 103B is in communication with the second optical module liquid-cooling plate 102B.

It should be noted that, as the first optical module liquid-cooling plate 102A and the second optical module liquid-cooling plate 102B need to be provided on different optical module layers, in order to facilitate mounting and abutting of the optical module, the first optical module liquid-cooling plate 102A may be connected by means of the first flexible pipeline 103A, and the second optical module liquid-cooling plate 102B may be connected by means of the second flexible pipeline 103B. It should be understood that, the first flexible pipeline 103A and the second flexible pipeline 103B may be common pipelines having a flexible bending effect, such as a non-metal hose, a metal bellow and a metal hose, as long as a transition soft connection with the first optical module liquid-cooling plate 102A and the second optical module liquid-cooling plate 102B can be implemented.

It should be noted that, the chip liquid-cooling module takes the first chip liquid-cooling plate 101A shown in Fig. 2 as an example; as a chip is generally fixedly mounted in the printed circuit board 400, a segment of the liquid-cooling pipeline that is connected to the first chip liquid-cooling plate 101A may use a metal pipeline, such as a common copper pipe, an aluminum pipe and a stainless steel pipe; the first metal pipeline 104A and the second metal pipeline 104B may be respectively connected to different ports of the first chip liquid-cooling plate 101A; the first metal pipeline 104A is in communication with the first flexible pipeline 103A, so that the first optical module liquid-cooling plate 102A is in communication with the first chip liquid-cooling plate 101A, the second metal pipeline 104B is in communication with the second flexible pipeline 103B, so that the second optical module liquid-cooling plate 102B is in communication with the first chip liquid-cooling plate 101A; and the lengths and shapes of the first flexible pipe 103 A, the second flexible pipe 103 B, the first metal pipeline and the second metal pipeline are not limited in the present embodiment, and may be adjusted according to actual conditions of the communication device.

It should be noted that, in the present embodiment, the first liquid-cooling pipeline and the second liquid-cooling pipeline are provided, so that the first optical module liquid-cooling plate 102A is connected to the first chip liquid-cooling plate 101A in series, and the second optical module liquid-cooling plate 102B is connected to the first chip liquid-cooling plate 101A in series, thereby facilitating independent control of circulation of the liquid-cooling working medium for one of the liquid-cooling pipelines.

In addition, in an embodiment, referring to Fig. 1, the liquid cooling pipeline includes:
a first liquid-cooling pipeline, wherein the first liquid-cooling pipeline includes a first flexible pipeline 103A and a first metal pipeline 104A, one end of the first metal pipeline 104A is in communication with the chip liquid-cooling module, the other end of the first metal pipeline 104A is in communication with one end of the first flexible pipeline 103A, the other end of the first flexible pipeline 103A is in communication with a liquid dispenser, and the liquid dispenser is further respectively in communication with the first optical module liquid-cooling plate 102A and the second optical module liquid-cooling plate 102B.

It should be noted that, taking the first chip liquid-cooling plate 101A as an example of the chip liquid-cooling module, for the pipeline types of the first flexible pipeline 103A and the first metal pipeline 104A, and a connection manner with the first chip liquid-cooling plate 101A, reference may be made to the description of the foregoing embodiment, and details are not repeated herein. The present embodiment differs from the foregoing embodiment in that: the first optical module liquid-cooling plate 102A and the second optical module liquid-cooling plate 102B are connected in parallel by means of the liquid dispenser; the first chip liquid-cooling plate 101A only needs to be connected to the liquid dispenser by means of the first liquid-cooling pipeline; and the liquid-cooling working medium respectively enters the first optical module liquid-cooling plate 102A and the second optical module liquid-cooling plate 102B by means of the liquid dispenser to implement liquid-cooling heat dissipation, and therefore, the length of the liquid-cooling pipeline can be effectively reduced, and the internal space is saved.

In addition, in an embodiment, referring to Fig. 1, the chip liquid-cooling module includes at least two chip liquid-cooling plates, and the at least two chip liquid-cooling plates are connected in series or in parallel by means of a liquid-cooling pipeline.

It should be noted that, a plurality of chips may also be provided in the communication device, as shown in Fig. 1, for example, two chips are provided in the printed circuit board 400, a second chip liquid-cooling plate 101B may be added while having the first chip liquid-cooling plate 101A; the first chip is cooled by the first chip liquid-cooling plate 101A; the second chip liquid-cooling plate 101B dissipates heat of the second chip; the mounting position of the second chip liquid-cooling plate 101B is adjusted according to the specific position of the second chip, and the arrangement manner in Fig. 1 is merely an example, and is not intended to limit the mounting position.

It should be noted that, the second chip liquid-cooling plate 101B and the first chip liquid-cooling plate 101A may be connected in parallel, as shown in Fig. 1, by means of the first metal pipeline 104A and the second metal pipeline 104B; taking the first metal pipeline 104A as an example, the first metal pipeline 104A is provided with three ports, one port is provided on one side to communicate with the first flexible pipeline 103A, and the other side is provided with two ports to respectively communicate with the first chip liquid-cooling plate 101A and the second chip liquid-cooling plate 101B, so as to implement parallel connection; certainly, series connection may be also implemented by providing a metal pipeline (not shown in the figure) between the first chip liquid-cooling plate 101A and the second chip liquid-cooling plate 101B, so as to implement circulation of a liquid-cooling working medium, and the present embodiment does not excessively limit the connection manner between the two chip liquid-cooling plates.

In addition, in an embodiment, referring to Fig. 1, a first protrusion 102C is provided on the bottom side of the first optical module liquid-cooling plate 102A, a second protrusion 102D is provided on the top side of the second optical module liquid-cooling plate 102B, and the optical module cage 200 further includes:
a first opening 202A provided on the top side of the first mounting layer 201A, the first protrusion 102C abutting against the optical module of the first mounting layer 201A by means of the first opening 202A; and
a second opening 202B provided at the bottom side of the second mounting layer 201B, the second protrusion 102D abutting against the optical module of the second mounting layer 201B by means of the second opening 202B.

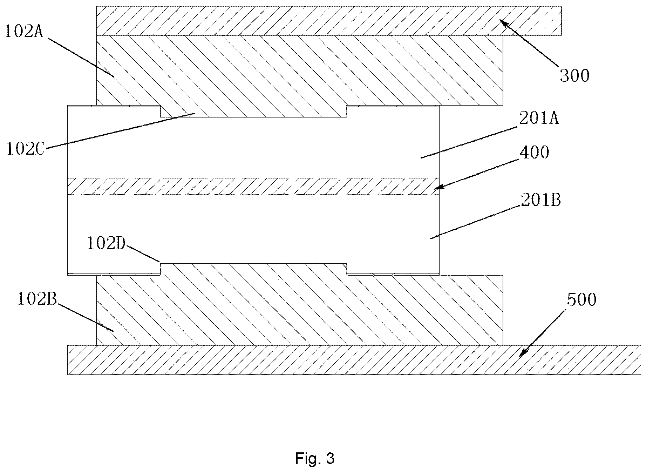

It should be noted that, according to the description of the foregoing embodiment, the first optical module liquid-cooling plate 102A is mounted on the top side of the first mounting layer 201A, and the second optical module liquid-cooling plate 102B is mounted on the bottom side of the second mounting layer 201B, so as to ensure that the optical modules mounted in the first mounting layer 201A and the second mounting layer 201B abut against each other. In the present embodiment, the first opening 202A is provided at the top side of the first mounting layer 201A, and the second opening 202B is provided at the bottom side of the second mounting layer 201B, as shown in Fig. 3, the first protrusion 102C stretches into the first mounting layer 201A through the first opening 202A to abut against the optical module to achieve heat transfer, and the second protrusion 102D follows the same principle, which is not repeated here.

In addition, in an embodiment, a thermal interface material is filled between the first optical module liquid-cooling plate 102A and the optical module of the first installation layer 201A; and the thermal interface material is filled between the second optical module liquid-cooling plate 102B and the optical module of the second mounting layer 201B.

It should be noted that, referring to Fig. 3, the first protrusion 102C and the second protrusion 102D can structurally abut against the optical module, however, it is difficult to avoid a fitting gap between the optical module liquid-cooling plate and the optical module; in order to absorb the fitting gap between the optical module liquid-cooling plate and the optical module to reduce the contact thermal resistance, the thermal interface material may be filled between the first optical module liquid-cooling plate 102A and the optical module of the first mounting layer 201A, and between the second optical module liquid-cooling plate 102B and the optical module of the second mounting layer 201B, so as to accelerate heat transfer, and the thermal interface material may be silicone grease, silica gel, thermal conductive adhesive, or the like, which is not limited herein.

In addition, the present embodiment further provides a communication device, including the liquid-cooling heat dissipation apparatus 100.

It should be noted that, in cases where the optical module cage 200 of the communication device has multiple layers, a plurality of optical module liquid-cooling plates can be respectively mounted in the multi-layer optical module cage 200 by means of the liquid-cooling heat dissipation apparatus 100 in the foregoing embodiment, and circulation of the liquid-cooling working medium is implemented by means of the liquid-cooling pipeline, thereby meeting the heat dissipation requirement of the multi-layer optical module, and improving the heat dissipation effect.

In addition, in an embodiment, referring to Fig. 1, the communication device further includes:
a printed circuit board 400, mounted between the first mounting layer 201A and the second mounting layer 201B;
a fixing plate 300, abutting against the top side of the first optical module liquid-cooling plate 102A, and fixedly connected to the printed circuit board 400 by means of a connector;
a tray 500, which abuts against the bottom side of the second optical module liquid-cooling plate 102B, is provided with a locking structure, and locks the second optical module liquid-cooling plate 102B to the second mounting layer 201B by means of the locking structure.

It should be noted that, as shown in Fig. 4, a slot (not shown) may be provided in the optical module cage 200, for example, provided between the first mounting layer 201A and the second mounting layer 201B, so that the printed circuit board 400 is inserted into the slot and fixed, thereby implementing that the optical module cage 200 is mounted on the printed circuit board 400, and the optical module can be electrically connected to the printed circuit board 400.

It should be noted that, as shown in Figs. 2 and 3, in order to ensure that the first optical module liquid-cooling plate 102A closely abuts against the top side of the first installation layer 201A, a fixing plate 300 may be installed on the upper side of the first optical module liquid-cooling plate 102A, and then the fixing plate 300 is fixedly mounted on the printed circuit board by means of a connector such as a spring screw, so that the first optical module liquid-cooling plate 102A closely abuts against the optical module of the first mounting layer 201A.

It should be noted that, as shown in Figs. 2 and 3, the tray 500 may be provided to fix the second optical module liquid-cooling plate 102B, a locking structure may be provided on the tray 500, and the second optical module liquid-cooling plate 102B is locked by means of the locking structure, so as to ensure that the second optical module liquid-cooling plate 102B properly abuts against the bottom optical module.

In addition, in an embodiment, referring to Fig. 1, the liquid-cooling heat dissipation apparatus 100 further includes a chip liquid-cooling module, and the chip liquid-cooling module is respectively in communication with the first optical module liquid-cooling plate 102A and the second optical module liquid-cooling plate 102B by means of the liquid-cooling pipeline; and the printed circuit board 400 further includes:
a chip, the chip liquid-cooling module abutting against the chip.

It should be noted that, for the structure and arrangement manner of the chip liquid-cooling module, reference may be made to the description of the foregoing embodiment of the liquid-cooling heat dissipation apparatus 100, and details are not repeatedly described herein.

It should be noted that the chip may be mounted at any position of the printed circuit board 400, and the chip liquid-cooling module abuts against the chip to perform liquid-cooling heat dissipation on the chip, thereby taking account of the heat dissipation requirements of the optical module and the chip simultaneously.

In addition, in an embodiment, referring to Fig. 1, the chip liquid-cooling module includes at least two chip liquid-cooling plates, and the at least two chip liquid-cooling plates are connected in series or in parallel by means of a liquid-cooling pipeline; the printed circuit board includes at least two chips; and each chip liquid-cooling plate abuts against the chip in one-to-one correspondence.

It should be noted that, for the principle of providing a plurality of chips on the printed circuit board 400, reference may be made to the description of the foregoing embodiment; and in cases where a plurality of chips are provided on the printed circuit board, the liquid-cooling heat radiation apparatus 100 only needs to be provided with a corresponding number of chips for heat radiation, which is not repeatedly described herein.

An embodiment of the present invention includes: a first optical module liquid-cooling plate; a second optical module liquid-cooling plate, the second optical module liquid-cooling plate being in communication with the first optical module liquid-cooling plate by means of a liquid-cooling pipeline; a liquid-cooling working medium, the liquid-cooling working medium circulating between the first optical module liquid-cooling plate, the liquid-cooling pipeline and the second optical module liquid-cooling plate; an optical module cage, wherein the optical module cage includes a first mounting layer and a second mounting layer, the first mounting layer is located on an upper side of the second mounting layer, an optical module is respectively mounted in the first mounting layer and the second mounting layer, the first optical module liquid-cooling plate abuts against the optical module of the first mounting layer, and the second optical module liquid-cooling plate abuts against the optical module of the second mounting layer. According to the technical solution of the present embodiment, a plurality of optical module liquid-cooling plates can be mounted on different installation layers of an optical module cage, and circulation of the liquid-cooling working medium is implemented by using the liquid-cooling pipeline, thereby satisfying a heat dissipation requirement of the optical modules provided on the multiple layers of the optical module cage, and improving a heat dissipation effect.

Although some implementations of the present invention have been described above, the present invention is not limited thereto. Those skilled in the art can make various equivalent modifications or replacements without departing from the spirit of the present invention. These equivalent modifications or replacements shall fall within the scope defined by the appended claims of the present invention.

## Claims

1. A liquid-cooling heat dissipation apparatus, comprising:
a first optical module liquid-cooling plate;
a second optical module liquid-cooling plate, the second optical module liquid-cooling plate being in communication with the first optical module liquid-cooling plate by means of a liquid-cooling pipeline;
a liquid-cooling working medium, the liquid-cooling working medium circulating between the first optical module liquid-cooling plate, the liquid-cooling pipeline and the second optical module liquid-cooling plate; and
an optical module cage, wherein the optical module cage comprises a first mounting layer and a second mounting layer, the first mounting layer is located on an upper side of the second mounting layer, an optical module is respectively mounted in the first mounting layer and the second mounting layer, the first optical module liquid-cooling plate abuts against the optical module of the first mounting layer, and the second optical module liquid-cooling plate abuts against the optical module of the second mounting layer.

2. The liquid-cooling heat dissipation apparatus according to claim 1, further comprising:
a chip liquid-cooling module, which is in communication with the first optical module liquid-cooling plate and the second optical module liquid-cooling plate respectively by means of the liquid-cooling pipeline.

3. The liquid-cooling heat dissipation apparatus according to claim 2, wherein the liquid-cooling pipeline comprises:
a first liquid-cooling pipeline, wherein the first liquid-cooling pipeline comprises a first flexible pipeline and a first metal pipeline, one end of the first metal pipeline is in communication with the chip liquid-cooling module, the other end is in communication with the first flexible pipeline, and the first flexible pipeline is in communication with the first optical module liquid-cooling plate; and
a second liquid-cooling pipeline, wherein the second liquid-cooling pipeline comprises a second flexible pipeline and a second pipeline pipe, one end of the second metal pipeline is in communication with the chip liquid-cooling module, the other end is in communication with the second flexible pipeline, and the second flexible pipeline is in communication with the second optical module liquid-cooling plate.

4. The liquid-cooling heat dissipation apparatus according to claim 2, wherein the liquid-cooling pipeline comprises:
a first liquid-cooling pipeline, wherein the first liquid-cooling pipeline comprises a first flexible pipeline and a first metal pipeline, one end of the first metal pipeline is in communication with the chip liquid-cooling module, the other end of the first metal pipeline is in communication with one end of the first flexible pipeline, the other end of the first flexible pipeline is in communication with a liquid dispenser, and the liquid dispenser is further respectively in communication with the first optical module liquid-cooling plate and the second optical module liquid-cooling plate.

5. The liquid-cooling heat dissipation apparatus according to claim 3 or 4, wherein the chip liquid-cooling module comprises at least two chip liquid-cooling plates, and the at least two chip liquid-cooling plates are connected in series or in parallel by means of the liquid-cooling pipeline.

6. The liquid-cooling heat dissipation apparatus according to claim 1, wherein a first protrusion is provided on the bottom side of the first optical module liquid-cooling plate, a second protrusion is provided on the top side of the second optical module liquid-cooling plate, and the optical module cage further comprises:
a first opening provided on the top side of the first mounting layer, the first protrusion abutting against the optical module of the first mounting layer by means of the first opening; and
a second opening provided at the bottom side of the second mounting layer, the second protrusion abutting against the optical module of the second mounting layer by means of the second opening.

7. The liquid-cooling heat dissipation apparatus according to claim 1, wherein
a thermal interface material is filled between the first optical module liquid-cooling plate and the optical module of the first installation layer; and
the thermal interface material is filled between the second optical module liquid-cooling plate and the optical module of the second mounting layer.

8. A communication device, comprising the liquid-cooling heat dissipation apparatus as claimed in any one of claims 1 to 7.

9. The communication device according to claim 8, further comprising:
a printed circuit board, mounted between the first mounting layer and the second mounting layer;
a fixing plate, abutting against the top side of the first optical module liquid-cooling plate, and
fixedly connected to the printed circuit board by means of a connector;
a tray, which abuts against the bottom side of the second optical module liquid-cooling plate, is provided with a locking structure, and locks the second optical module liquid-cooling plate to the second mounting layer by means of the locking structure.

10. The communication device according to claim 9, wherein the liquid-cooling heat dissipation apparatus further comprises a chip liquid-cooling module, and the chip liquid-cooling module is in communication with the first optical module liquid-cooling plate and the second optical module liquid-cooling plate respectively by means of the liquid-cooling pipeline; the printed circuit board further comprises:
a chip, the chip liquid-cooling module abutting against the chip.

11. The communication device according to claim 10, wherein the chip liquid-cooling module comprises at least two chip liquid-cooling plates, the at least two chip liquid-cooling plates are connected in series or in parallel by means of the liquid-cooling pipeline, the printed circuit board comprises at least two chips, and each chip liquid-cooling plate abuts against the chips in a one-to-one correspondence.
